# EUROPEAN PATENT APPLICATION

(11) **EP 4 822 763 A1**
(43) Date of publication of application: **14.10.2026**
(21) Application number: 24900744.4
(22) Date of filing: 29.03.2024
(51) Int. Cl.: H01M 4/134, H01M 4/583, H01M 4/62, H01M 4/1393, H01M 10/0562, H01M 10/052, H01M 4/02

(54) **ANODE FOR ALL-SOLID-STATE BATTERY AND ALL-SOLID-STATE BATTERY COMPRISING SAME**

(30) Priority: 07.12.2023 KR 20230176934
(71) Applicant: Samsung SDI Co., Ltd., Yongin-si, Gyeonggi-do 17084 (KR)
(72) Inventor: YANG, Jinhoon, Yongin-si, Gyeonggi-do 17084 (KR); LEE, Jungho, Yongin-si, Gyeonggi-do 17084 (KR); KIM, Wonjung, Yongin-si, Gyeonggi-do 17084 (KR); SOHN, Juhee, Yongin-si, Gyeonggi-do 17084 (KR); SHIN, Hyuksoo, Yongin-si, Gyeonggi-do 17084 (KR); KIM, Yunsik, Yongin-si, Gyeonggi-do 17084 (KR)
(74) Representative: Michalski Hüttermann & Partner mbB
(86) International application number: PCT/KR2024/004117
(87) International publication number: WO 2025/121553

(57) **Abstract**

The present invention relates to an anode for an all-solid-state battery, a manufacturing method thereof, and an all-solid-state battery comprising the anode, the anode comprising an anode current collector, and an anode layer disposed on the anode current collector and containing an anode active material, a solid electrolyte, polytetrafluoroethylene, and polyvinylidene fluoride, wherein mixing ratio of polytetrafluoroethylene and polyvinylidene fluoride is 95:5 to 80:20 in terms of weight ratio.

## Description

### TECHNICAL FIELD

Embodiments relate to an anode for an all solid-state battery and an all-solid-state solid battery including the same.

### BACKGROUND ART

Recently, there has been rapid progress in electric devices using batteries, e.g., mobile phones, laptop computers, and electric vehicles.

In such a battery, the development of an all-solid-state battery, which uses lithium metal as the anode, is underway. The all solid-state battery refers to a battery in which all materials are solids, e.g., a battery using a solid electrolyte. The all-solid-state battery is structurally strong because the electrolyte is solid, and thus, there is a reduced risk of fire or explosion caused by an electrolyte leakage due to external impact, or the like. The battery may be formed in various shapes.

### DETAILED DESCRIPTION OF THE INVENTION

### TECHNICAL PROBLEM

Some embodiments provide an anode for an all-solid-state battery exhibiting excellent cycle-life characteristic.

Another embodiment provides an all-solid-state battery including the anode.

### TECHNICAL SOLUTION

Some embodiments provide an anode for an all-solid-state battery including an anode current collector; and an anode layer on the anode current collector and including an anode active material, a solid electrolyte, polytetrafluoroethylene, and polyvinylidene fluoride, wherein a mixing ratio of polytetrafluoroethylene and polyvinylidene fluoride is 95:5 to 80:20 by weight ratio.

### ADVANTAGEOUS EFFECTS

An anode for all-solid-state according to some embodiments may exhibit excellent cycle-life characteristic.

### BRIEF DESCRIPTION OF THE DRAWINGS

FIG. 1 is a schematic diagram schematically showing an all-solid-state battery according to one embodiment.
FIG. 2 is a schematic diagram schematically showing an all-solid-state battery according to another embodiments.
FIG. 3 is an FE-SEM image of the anode for the all-solid-state cell according to Example 1.

### BEST MODE FOR PERFORMING INVENTION

Example embodiments will now be described more fully hereinafter. Rather, these embodiments are provided so that this disclosure will be thorough and complete, and will fully convey exemplary implementations to those skilled in the art.

Terms used in the specification is used to explain embodiments, but are not intended to be limiting. Expressions in the singular include expressions in plural unless the context clearly dictates otherwise.

The term "combination thereof may include a mixture, a laminate, a complex, a copolymer, an alloy, a blend, a reactant of constituents.

The terms "comprise", "include" or "have" are intended to designate that the performed characteristics, numbers, step, constituted elements, or a combination thereof is present, but it should be understood that the possibility of presence or addition of one or more other characteristics, numbers, steps, constituted element, or a combination are not to be precluded in advance.

In the specification, unless explicitly described to the contrary, the word "comprise" and variations such as "comprises" or "comprising" will be understood to imply the inclusion of stated elements but not the exclusion of any other element.

The terms "about" and "substantially" used throughout the present specification refer to the meaning of the mentioned with inherent preparation and material permissible errors when presented, and are used in the sense of being close to or near that value. They are used to help understand the present invention and to prevent unconscientious infringers from unfairly exploiting the disclosure where accurate or absolute values are mentioned.

In the specification, A and/or B and A or B are not exclusive terms, and indicate A, B, or both A and B.

Unless otherwise defined in the specification, it will be understood that when an element, such as a layer, a film, a region, a plate, and the like is referred to as being "on" or "over" another element, it may be directly on, connected to, or coupled to the other element or layer, or one or more intervening elements may be present.

In the present invention, "particle size" or "a particle diameter", may be an average particle diameter. Unless otherwise defined in the specification, the average particle diameter may be defined as an average particle diameter D50 indicating the diameter of particles having a cumulative volume of 50 volume % in the particle size distribution. The particle size may be measured by a method well known to those skilled in the art, for example, by a particle size analyzer, or by a transmission electron microscopic image, a scanning electron microscopic image), or a field emission scanning electron microscopy (FE-SEM). In another embodiments, a dynamic light-scattering measurement device is used to perform a data analysis, and the number of particles is counted for each particle size range, and from this, the average particle diameter (D50) value may be easily obtained through a calculation, or a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of 60 W, and calculating an average particle diameter (D50) in the 50 % standard of particle distribution in the measuring device.

The term "thickness" may be measured through a photograph taken with an optical microscope such as a scanning electron microscope.

Some embodiments provide an anode for an all-solid-state battery including an anode current collector; and an anode layer on the anode current collector and comprising an anode active material, a solid electrolyte, polytetrafluoroethylene, and polyvinylidene fluoride, wherein a mixing ratio of polytetrafluoroethylene and polyvinylidene fluoride is 95:5 to 80:20 by weight ratio.

The anode according to some embodiments includes polytetrafluoroethylene and polyvinylidene fluoride, as a binder and suitably at a weight ratio of 95:5 to 80:20. According to another embodiment, the mixing ratio of polytetrafluoroethylene and polyvinylidene fluoride may be 90:10 to 85:15 by weight ratio.

Since polytetrafluoroethylene and polyvinylidene fluoride are dry binders, an anode layer may be suitably prepared without using a solvent. In some embodiments, the term "dry binder" refers to a binder that may be used in a dry process without a solvent in an anode layer composition for preparing the anode layer.

In some embodiments, since polytetrafluoroethylene and polyvinylidene fluoride are included within the above amount ranges, and thus, even if polytetrafluoroethylene is partially decomposed into LiF during charging and discharging, polyvinylidene fluoride included within the amount range enables the anode to maintain structural stability. Furthermore, since polytetrafluoroethylene capable of fibrillating at room temperature and becoming well entangled with the anode active material during the anode preparation is used in a large amount as a main binder, an anode active material layer may be readily prepared by a dry process, and thus, fibrillation is sufficiently achieved during dry process, thereby maintaining uniformity of the anode composition. Polyvinylidene fluoride may impart structural stability to the anode layer and further improve adhesion, and used together with polytetrafluoroethylne in a small amount, e.g., in a weight ratio of 5 to 20, it may serve to maintain cohesion between active materials and adhesion to a current collector.

If polytetrafluoroethylene and polyvinylidene fluoride are included in a ratio exceeding 95/5, for example, if polytetrafluoroethylene is included in an excessive amount, structural stability of the anode may decrease as cycling is repeated, resulting in cycle-life deterioration.

Conversely, if polytetrafluoroethylene and polyvinylidene fluoride are included in a ratio of less than 80/20, for example, if the amount of polyvinylidene fluoride is increased, non-uniformity due to reduced dispersibility may occur during a dry preparation process.

In some embodiments, a total amount of polytetrafluoroethylene and polyvinylidene fluoride may be 1 wt% to 7 wt%, 1.5 wt% to 6 wt%, or 2 wt% to 4 wt% based on the total 100 wt% of the anode layer. If polytetrafluoroethylene and polyvinylidene fluoride are included in the anode layer at the above mixing ratio and a total amount thereof falls within the above range, a decrease in ionic conductivity and electrical conductivity cause by an excessive amount of the binder may be more effectively prevented.

In the anode layer according to some embodiments, the polytetrafluoroethylene may be a fibrillated polytetrafluoroethylene.

The anode according to some embodiments includes the solid electrolyte, and as described above, utilize the dry binder together therewith, such that no solvent is required during the anode preparation. Thus, no degradation of the solid electrolyte caused by a reaction between the solid electrolyte and the solvent occurs.

The solid electrolyte may be a sulfide-based solid electrolyte. Since the anode includes the solid electrolyte, for example, the sulfide-based solid electrolyte having excellent ionic conductivity, the lithium ion conductivity may sufficiently be exhibited. Thus, it may function sufficiently as a battery.

In some embodiments, the sulfide-based solid electrolyte may be Li₂S-P₂S₅, Li₂S-P₂S₅-LiX (where X is an halogen element, for example, I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each an integer of 0 or more and 12 or less, and Z is Ge, Zn, or Ga), Li₂S-GeS₂, Li₂S-SiS₂-Li₃PO₄, Li₂S-SiS₂-LiₚMO_{q} (where p and q are each an integer of 0 or more and 12 or less, and M is P, Si, Ge, B, Al, Ga, or In), LiₐM_{b}P_{c}S_{d}Aₑ (where a, b, c, d, and e are each an integer of 0 or more and 12 or less, M is Ge, Sn, Si, or a combination thereof, and A is F, Cl, Br, or I). The sulfide-based solid electrolyte may be, for example, Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2) or Li₇₋ₓPS₆₋ₓIₓ (0≤x≤2). In some embodiments, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, or the like.

In one embodiment, the sulfide-based solid electrolyte may be an argyrodite-type sulfide-based solid electrolyte. The argyrodite-type sulfide-based solid electrolyte may be, for example, LiₐM_{b}P_{c}S_{d}Aₑ (where a, b, c, d, and e are each an integer of 0 or more and 12 or less and M is Ge, Sn, Si, or a combination thereof, and A is F, Cl, Br, or I).

In some embodiments, it may include Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, Li₆PS₅I, Li_{5.75}PS_{4.75}Cl_{1.25}, (Li_{5.69}Cu_{0.06})PS_{4.75}Cl_{1.25}, (Li_{5.72}Cu_{0.03})PS_{4.75}Cl_{1.25}, (Li_{5.69}Cu_{0.06})P(S_{4.70}(SO₄)_{0.05})Cl_{1.25}, (Li_{5.69}Cu_{0.06})P(S_{4.60}(SO₄)_{0.15})Cl_{1.25}, (Li_{5.72}Cu_{0.03})P(S_{4.725}(SO₄)_{0.025})Cl_{1.25}, (Li_{5.72}Na_{0.03})P(S_{4.725}(SO₄)_{0.025})Cl_{1.25}, Li_{5.75}P(S_{4.725}(SO₄)_{0.025})Cl_{1.25}, or a combination thereof, but is not limited thereto.

The sulfide-based solid electrolyte may be amorphous, crystalline, or a combination thereof. The sulfide-based solid electrolyte may be prepared, for example, by mixing Li₂S and P₂S₅ at a mole ratio of 50:50 to 90:10, or 50:50 to 80:20. In the range of the mixing ratio, the sulfide-based solid electrolyte exhibiting excellent ionic conductivity may be prepared. As other components, SiS₂, GeS₂, B₂S₃, or the like may be further included thereto, thereby further improving ionic conductivity.

The mixing procedure of the sulfur-included source for preparing the sulfide-based solid electrolyte may be performed by a mechanical milling or a solution method. Mechanical milling is a method in which starting raw material, a ball mill or the like are introduced into a reactor and vigorously agitated to pulverize the starting raw material into fine particles and mix them. The solution method may provide a solid electrolyte as a precipitate by mixing starting raw material in a solvent. In addition, if the heat treatment is performed after mixing, the crystal structure of the solid electrolyte may be further stabilized and ionic conductivity may be further improved. For example, the sulfide-based solid electrolyte may be prepared by mixing sulfur-included raw materials and heat-treating them twice or more, which may provide a sulfide-based solid electrolyte with high ionic conductivity and rigidity.

The sulfide-based solid electrolyte may be a commercial solid electrolyte.

The solid electrolyte may have a particle shape. The solid electrolyte may have an average particle diameter D50 of 5.0 µm or less, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

In some embodiments, an amount of the solid electrolyte may be, based on 100 wt% of the anode layer, 5 wt% to 28 wt%, 8 wt% to 25 wt%, or 10 wt% to 20 wt%. If the amount of the solid electrolyte falls within the range, ionic conduction between the active materials may be facilitated.

In some embodiments, the anode active material may be crystalline carbon, a Si-based material, or a combination thereof, and in another embodiment, the anode active material may be crystalline carbon.

The crystalline carbon may be, for example, natural graphite, artificial graphite, mesophase carbon microbead, carbon nanotube, graphene, or a combination thereof. The crystalline carbon may have unspecified shape, sheet shape, flake shape, spherical shape, or fiber shape.

The Si-based material may be silicon, a silicon-carbon composite, SiOₓ (0 <x<2), a Si-Q alloy (wherein Q is an element selected from an alkali metal, an alkaline-earth metal, a Group 13 element, a Group 14 element (except for Si) a Group 15 element, a Group 16 element, a transition metal, a rare earth element, and a combination thereof), or a combination thereof.

The silicon-carbon composite may be a composite of silicon and amorphous carbon. According to some embodiments, the silicon-carbon composite may include silicon particles and amorphous carbon coated on the surface of the silicon particle. For example, the silicon-carbon composite may include a secondary particle (core) in which silicon primary particles are agglomerated and an amorphous carbon coating layer (shell) positioned on the secondary particle. The amorphous carbon is also positioned between the silicon primary particles, for example, the silicon primary particles may be coated with amorphous carbon. The secondary particle may be presented distributed in an amorphous carbon matrix.

The silicon-carbon composite may further include crystalline carbon. In some embodiments, the silicon-carbon composite may include a core including crystalline carbon and silicon particles and an amorphous carbon coating layer on a surface of the core.

The silicon particles may be nano particles. The silicon nano particle may have an average particle diameter of 10 nm to 1000 nm, and according to one or more embodiments, it may have about 10 nm to about 200 nm, or 20 nm to 150 nm. If the particle diameter of the silicon nano particles is within the range, the extreme volume expansion caused during charge and discharge may be suppressed, and a breakage of the conductive path due to crushing of particle during charging and discharging may be prevented.

The amorphous carbon may be soft carbon, hard carbon, mesophase pitch carbide, calcined cokes, or a combination thereof.

In some embodiments, an amount of the anode active material may be, based on the total 100 wt% of the anode layer, 70 wt% to 85 wt%, 75 wt% to 85 wt%, or 80 wt% to 85 wt%. If the amount of the anode active material falls within the range, higher capacity may be realized.

The anode layer according to some embodiments may further include a conductive material. The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, carbon fiber, carbon nanofiber, carbon nanotube or the like; a metal-based material of a metal powder or a metal fiber including; copper, nickel, aluminum, silver, or the like; a conductive polymer such as polyphenylene derivatives; or mixtures thereof.

In some embodiments, an amount of the conductive material may be, based on 100 wt% of the anode layer, 1 wt% to 10 wt%, 1 wt% to 5 wt%, or 1 wt% to 4 wt%.

The thickness of the anode layer may be, for example, 1 µm to 500 µm, 1 µm to 200 µm, 1 µm to 100 µm, or 1 µm to 50 µm, but is not limited thereto.

The anode current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape. A thickness of the anode current collector may be 1 µm to 20 µm, 5 µm to 15 µm, or 7 µm to 10 µm.

The current collector may include a metal substrate and may further include a thin film formed on the substrate.

The thin film may include an element capable of forming an alloy with lithium, for example, gold, silver, zinc, tin, indium, silicon, aluminum, bismuth, or a combination thereof, but is not limited thereto, and any elements capable of forming an alloy with lithium in the relevant art may also be utilized. If the current collector further includes a thin film, lithium deposited during charging may form a more planar lithium-containing layer, which may further improve the cycle-life characteristics of the all-solid-state battery.

A thickness of the thin membrane may be 1 nm to 800 nm, 10 nm to 700 nm, 50 nm to 600 nm, or 100 nm to 500 nm. If the thickness of the thin film is within the range, the cycle-life characteristics may be further enhanced.

### <Preparation of anode>

The anode according to some embodiments may be prepared by mixing the anode active material, the solid electrolyte, and polyvinylidene fluoride to prepare a mixture; mixing the mixture with polytetrafluoroethylene to prepare an anode layer mixture; and pressing the anode layer mixture to prepare an anode layer film.

During preparation of the anode layer, if polytetrafluoroethylene is first mixed with the anode active material and the solid electrolyte, fibrillation proceeds, causing viscosity of the mixture to become excessively high, thereby making uniform mixing with polyvinylidene fluoride, which is undesirable.

Hereinafter, each procedure will be illustrated.

First of all, an active material, polyvinylidene fluoride, and a solid electrolyte are mixed. In the mixing process, a conductive material may be further added. The active material, polyvinylidene fluoride, the solid electrolyte, and the conductive material may be utilized in a powder state.

The mixing may be carried out by a dry procedure without using a solvent.

The mixing may be carried out at a speed of 500 rpm to 2500 rpm, 800 rpm to 2000 rpm, or 1000 rpm to 2500 rpm, and may be carried out for 0.5 minutes to 10 minutes, or 1 minute to 3 minutes. If the mixing is carried out under the speed and time conditions, uniform mixing may be achieved during dry mixing without breaking the active material.

Thereafter, polytetrafluoroethylene is added to the resulting mixture and stirred to prepare an anode layer mixture. The stirring may be carried out for 0.5 minutes to 10 minutes, or 1 minute to 3 minutes. During the stirring, fibrillation of polytetrafluoroethylene progresses and the viscosity increases, thereby resulting in a clay-like state.

Subsequently, the resulting anode layer mixture is subjected to a pressing. Prior to the pressing, a planarization process using a roller may be further carried out in order to adjust the thickness to a desired value.

The pressing may be carried out by applying a pressure of 2 MPa to 10 MPa. If the pressing is carried out within the pressure range, the physical structure of the mixture may not be broken, thereby allowing pressure to be uniformly applied.

The used amounts of the anode active material, polytetrafluoroethylene, polyvinylidene fluoride, the conductive material, and the solid electrolyte may be appropriately adjusted to be the amounts and the mixing ratio in the anode layer.

A thickness of the anode layer film may be 1 µm to 100 µm, 10 µm to 80 µm, or 20 µm to 80 µm.

A current collector may be disposed on the prepared anode layer film to prepare an anode. The disposition of the current collector may be carried out by disposing the current collector on the anode layer film prior to battery fabrication, or during battery fabrication by placing the anode layer in contact with a solid electrolyte layer and disposing the current collector on another side of the anode layer that is not in contact with the solid electrolyte layer.

### < All-solid-state battery >

Another embodiment provides an all-solid-state battery including the anode.

The all-solid-state battery includes a cathode, an anode, and a solid electrolyte layer between the cathode and the anode. The anode may be the anode according to some embodiments.

### [Positive electrode]

The cathode for the all-solid-state battery according to one or more embodiments includes a cathode current collector and a cathode active material layer on one surface of the positive current collector.

The cathode active material layer may include a cathode active material.

The cathode active material may include compounds that reversibly intercalate and deintercalate lithium ions. For example, the cathode active material may include one or more composite oxides of a metal selected from cobalt, manganese, nickel, and a combination thereof, and lithium. The examples of the cathode active material may be LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ ( 0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the chemical formulas A is selected from Ni, Co, Mn, or a combination thereof; B¹ is selected from Al, Ni, Co, Mn, Cr, Fe, Mg, Sr, V, a rare earth element, or a combination thereof; D¹ is selected from O, F, S, P, or combination thereof; E is selected from Co, Mn, or combination thereof; F¹ is selected from F, S, P, or a combination thereof; G is selected from Al, Cr, Mn, Fe, Mg, La, Ce, Sr, V, or a combination thereof; Q is selected from Ti, Mo, Mn, or a combination thereof; I¹ is selected from Cr, V, Fe, Sc, Y, or a combination thereof; J is selected from V, Cr, Mn, Co, Ni, Cu, or a combination thereof; L¹ is selected from Mn, Al, or a combination thereof.

According to some embodiments, the cathode active material may be a ternary lithium transition metal oxide such as LiNiₓCo_{y}Al_{z}O₂(NCA), LiNiₓCo_{y}Mn_{z}O₂(NCM) (wherein, 0<x<1, 0<y<1, 0<z<1, x+y+z=1), or the like.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxy carbonate of a coating element. The compound for the coating layer may be amorphous or crystalline.

The coating element included in the coating layer may include Mg, Al, Co, K, Na, Ca, Si, Ti, V, Sn, Ge, Ga, B, As, Zr, or mixtures thereof. The coating layer may be formed by any coating method that does not adversely affect the properties of the cathode active material, for example, spray coating, dip coating, or the like, and a detailed description thereof is not illustrated since such methods will be readily understood by those of ordinary skill in the art.

The coating layer may be any coating materials which are known as a coating layer for the cathode active material of the all solid battery. For example, it may be a buffer layer which serves to reduce an interface resistance between the cathode active material and the solid electrolyte. For example, the buffer layer may include lithium-metal-oxide and this metal may be one or more elements selected from Al, B, Ca, Ce, Cr, Fe, Mg, Mo, Nb, Si, Sn, Sr, Ta, V, W, or Zr. The example of the buffer layer may be Li₂O-ZrO₂ (LZO), LiNbO₂, or the like.

If the cathode active material is ternary material including nickel, cobalt, and manganese, or nickel, cobalt, and aluminum, the capacity density of the all-solid-state battery may be further improved, and metal dissolution from the cathode active material in a charged state may be further reduced. This may render to further improve long-term reliability and cycle characteristics of the all-solid-state battery in a charged state.

The average particle diameter of the cathode active material may be 1 µm to 25 µm, for example, 3 µm to 25 µm, 1 µm to 20 µm, 1 µm to 18 µm, 3 µm to 15 µm, or 5 µm to 15 µm. For example, the cathode active material may include small particles with an average particle diameter D50 of 1 µm to 9 µm and large particles with an average particle diameter D50 of 10 µm to 25 µm. The cathode active material with a particle diameter range may be harmoniously mixed with other components in the cathode active material layer and may achieve high capacity and high energy density.

The cathode active material may be secondary particles where a plurality of primary particles is agglomerated, or monocrystalline (single crystal). The shape of the cathode active material may be, a spherical shape, a shape close to spherical, or a polyhedron shape, or unspecified shape, or the like.

In the cathode active material layer, an amount of the cathode active material is not limited, and may be in any range which may be applied to a cathode layer of the conventional all-solid-state secondary battery. For example, based on the total 100 wt% of the cathode active material layer, the cathode active material may be included at 55 wt% to 99.5 wt%, for example, 65 wt% to 95 wt%, or 75 wt% to 91 wt%.

The cathode active material layer may further include a binder and/or a conductive material.

The binder may be polyvinyl alcohol, carboxymethyl cellulose, hydroxypropyl cellulose, diacetylcellulose, polyvinylchloride, carboxylated polyvinylchloride, polyvinyl fluoride, polyethylene oxide, polyvinyl pyrrolidone, polyurethane, polytetrafluoroethylene, polyvinylidene fluoride, polyvinylidene fluoride-hexafluoropropylene, polyethylene, polypropylene, a styrene-butadiene rubber, an acrylated styrene-butadiene rubber, an epoxy resin, nylon, or the like, but is not limited thereto.

The binder may be included in an amount of 0.1 wt% to 5 wt%, or 0.1 wt% to 3 wt% based on the total 100 wt% of the cathode active material layer. In the range of amount, the binder may exhibit sufficient adhesion ability without deteriorating the battery performance.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, carbon fiber, carbon nanofiber, carbon nanotube or the like; a metal-based material of a metal powder or a metal fiber including; copper, nickel, aluminum, silver, or the like; a conductive polymer such as polyphenylene derivatives; or mixtures thereof.

The conductive material may be included in an amount of 0.1 wt% to 5 wt%, or 0.1 wt% to 3 wt% based on the total 100 wt% of the cathode active material layer. The conductive material in the above amount range may improve the electrical conductivity without deteriorating battery performance.

The cathode active material layer may further include a solid electrolyte. The solid electrolyte included in the cathode active material layer may be an inorganic solid electrolyte such as a sulfide-based solid electrolyte, an oxide-based solid electrolyte, a halide-based solid electrolyte, or the like, or solid polymer electrolyte.

The sulfide-based solid electrolyte is described above with respect to the anode layer. The sulfide-based solid electrolyte included in the cathode active material layer may be the same as or different from the sulfide-based solid electrolyte included in the anode layer.

The oxide-based solid electrolyte may be, for example, Li₁₊ₓTi₂₋ₓAl(PO₄)₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate(LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanumtitanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, a Garnet-based ceramics Li₃₊ₓLa₃M₂O₁₂ (M= Te, Nb, or Zr, and x is an integer of 1 to 10), or a mixture thereof.

The halide-based solid electrolyte may include a Li element, an M element (where M is a metal except for Li), and an X element (where X is a halogen). The X may be, for example, F, Cl, Br and I. In one embodiment, the halide-based solid electrolyte may include at least one of Br and Cl, as the X. The M may be, for example, a metal element such as Sc, Y, B, Al, Ga, In, and the like.

The composition of the halide-based solid electrolyte is not limited, but the halide-based solid electrolyte may be represented by Li₆₋₃ₐMₐBr_{b}Cl_{c} (where, M is a metal, except for Li, 0<a<2, 0≤b≤6, 0≤c≤6, b+c=6). The a may be 0.75 or more, or 1 or more, and the a may be 1.5 or less. The b may be 1 or more, or 2 or more. The c may be 3 or more, or 4 or more. The exemplary of the halide-based solid electrolyte may be Li₃YBr₆, Li₃YCl₆ or Li₃YBr₂Cl₄.

The solid polymer electrolyte may include at least one selected from, for example, polyethylene oxide, poly(diallyldimethylammonium)trifluoromethanesulfonylimide(poly(diallyldimethyl ammonium)TFSI), Cu₃N, Li₃N, LiPON, Li₃PO_{4·}Li₂S_{·}SiS₂, Li₂S_{·}GeS_{2·}Ga₂S₃, Li₂O_{·}11Al₂O₃, Na₂O_{·}11Al₂O₃, (Na,Li)₁₊ₓTi₂₋ₓAlₓ(PO₄)₃ (0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-Silicates, Li_{0.3}La_{0.5}TiO₃, Na₅MSi₄O₁₂(M is a rare-earth element such as Nd, Gd, Dy, or the like), Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (0≤x≤0.8, 0≤y≤1.0, M is Nd, Sm, Eu, Gd, Tb, Dy, Ho, Er, Tm or Yb), Li_{1+x+y}QₓTi₂₋ₓSi_{y}P_{3-y}O₁₂ (0<x≤0.4, 0<y≤0.6, Q is Al or Ga), Li₆BaLa₂Ta₂O₁₂, Li₇La₃Zr₂O₁₂, Li₅La₃Nb₂O₁₂, Li₅La₃M₂O₁₂ (M is Nb or Ta), or Li₇₊ₓAₓLa₃₋ₓZr₂O₁₂ (0<x<3, A is Zn).

The cathode current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

### < Solid electrolyte layer>

The solid electrolyte layer includes a solid electrolyte. The solid electrolyte may be an inorganic solid electrolyte such as a sulfide-based solid electrolyte, an oxide-based solid electrolyte, a halide-based solid electrolyte, and the like, or solid polymer electrolyte. In some embodiments, the inorganic solid electrolyte such as he sulfide-based solid electrolyte, oxide-based solid electrolyte, halide-based solid electrolyte, or the like, and solid polymer electrolyte are the same as those described abovet 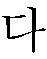 .

The solid electrolyte may have a particle shape and may have an average particle diameter D50 of 5.0 µm or less, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

The solid electrolyte layer may further include a binder. The binder may be a styrene butadiene rubber, polytetrafluoroethylene, polyvinylidene fluoride, polyethylene, an acrylate-based polymer, or a combination thereof, but is not limited thereto, and may be any material which is generally used in the related art. The acrylate-based polymer may be butyl acrylate, polyacrylate, polymethacrylate, or a combination thereof.

The solid electrolyte layer may be prepared by adding a solid electrolyte to a binder solution, coating it on a substrate film, and drying it. The binder solution may include isobutyryl isobutylate, xylene, toluene, benzene, hexane, or a combination thereof, as a solvent. The solid electrolyte layer preparation is widely known in the art, so a detailed description thereof will be omitted in the specification.

The solid electrolyte layer may further include an alkali metal salt, and/or an ionic liquid, and/or a conductive polymer.

The alkali metal salt may be, for example, a lithium salt. In the solid electrolyte layer, an amount of the lithium salt may be 1 M or more, for example, 1 M to 4 M. In this case, the lithium salt may improve the lithium ion mobility of the solid electrolyte layer, thereby improving ionic conductivity.

The lithium salt, may be, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato)borate (LiBOB), lithium oxalyldifluoroborate (LIODFB), lithium difluoro(oxalato)borate (LiDFOB), lithium bis(trifluoromethanesulfonyl)imide (LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄, or a mixture thereof.

The lithium salt may be an imide-based, for example, the imide-based lithium salt may be lithium bis(trifluoro methanesulfonyl)imide (LiTFSI, LiN(SO₂CF₃)₂), lithium bis(fluorosulfonyl)imide (LiFSI, or LiN(SO₂F)₂). The lithium salt may suitably maintain the chemical reactivity with the ionic liquid, and thus, the ionic conductivity may be maintained or improved.

The ionic liquid refers to salts composed solely of ions that have a melting point at a room temperature or less and is in a liquid state at a room temperature, or a room-temperature molten salt.

The ionic liquid may be a compound including a) at least one cation selected from a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, or a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, or (CF₃SO₂)₂N⁻.

The ionic liquid may be, for example, at least one selected from N-methyl-N-propylpyrrolidinium bis(trifluoromethanesulfonyl)imide, N-butyl-N-methylpyrrolidinium bis (3-trifluoromethylsulfonyl)imide, 1-butyl-3-methylimidazolium bis(trifluoromethylsulfonyl)amide, or 1-ethyl-3-methylimidazolium bis(trifluoromethylsulfonyl)amide.

In the solid electrolyte layer, the weight ratio between the solid electrolyte and the ionic liquid may range from 0.1:99.9 to 90:10, for example, from 10:90 to 90:10, from 20:80 to 90:10, from 30:70 to 90:10, from 40:60 to 90:10, or from 50:50 to 90:10. The solid electrolyte layer within the range may have an improved electrochemical contact area to the electrode, and thus, the ionic conductivity may be maintained or improved. Accordingly, the energy density, discharge capacity, rate capability, or the like of the all-solid-state rechargeable battery may be improved.

### <Elastic layer>

The all-solid-state battery according to one embodiment may further include an elastic layer which may buffer changes in thickness generated during charging and discharging. The elastic layer may be positioned between the anode and a case.

The elastic layer may include a material having an elastic recovery rate of 50 % or more and insulating properties, and in one embodiment, may include silicone rubber, acrylic rubber, fluorinated rubber, nylon, synthetic rubber, or a combination thereof. The elastic material may be present in a form of a polymer sheet.

### <Fabrication of all-solid-state battery>

The all-solid-state battery according to some embodiments may be fabricated by preparing an assembly including a anode, a cathode, and a solid electrolyte layer positioned between the anode and the cathode, and pressing the assembly.

The pressing may be carried out at a temperature of 25 °C to 90 °C. The pressing may be carried out under a pressure of 550 MPa or less, for example, 500 MPa or less, for example, a pressure of 1 MPa to 500 MPa. The pressing time may be varied depending on temperature and pressure, for example, it may be less than 30 minutes. The pressing may be carried out using, for example, isostatic press, roll press, plate press, or warm isostatic press (WIP).

The all-solid-state secondary battery may be a unit battery including a structure of the cathode/ the solid electrolyte layer/the anode, a bicell including a structure of the cathode/the solid electrolyte layer/the anode/the solid electrolyte layer/ the cathode, or a stacked battery where the unit batteries are repeated.

The shapes of the all-solid-state rechargeable battery are not limited, but, for example, a coin-type, a button-type, a sheet-type, a laminate-type, a cylindrical-type, or a flat-type, or the like. The all-solid-state rechargeable battery may be applied to large-sized batteries used in electric vehicles or the like. For example, the all-solid-state rechargeable battery may be also used in hybrid vehicles such as a plug-in hybrid electric vehicle (PHEV), or the like. Furthermore, the all-solid-state rechargeable battery may be utilized in various applications requiring large-capacity energy storage, and for example, may be applied to electric bicycles or power tools. Furthermore, the all-solid-state rechargeable battery may be used in various fields such as portable electronic devices.

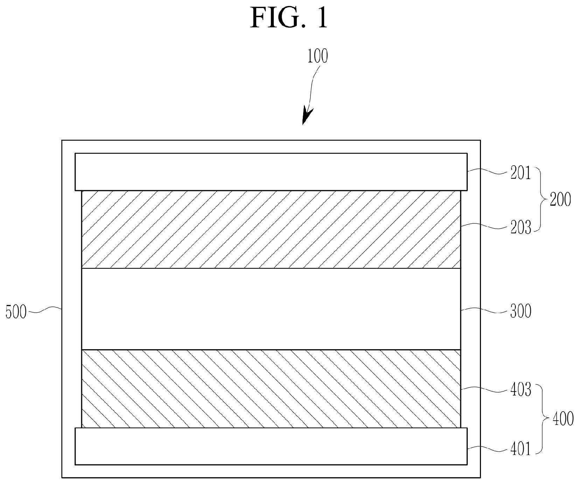

FIG. 1 is a cross-sectional view showing the all solid-state battery according to embodiments. Referring to FIG. 1, the all solid-state battery 100 may have a structure in which an electrode assembly is stacked with a anode 400 including a anode current collector 401 and a anode layer 403, a solid electrolyte layer 300, and a cathode 200 including a cathode active material layer 203 and a positive current collector 201, is housed in a case such as a pouch, or the like. The all-solid-state battery 100 may further include an elastic layer 500 positioned on the outside of at least one of the cathode 200 and the anode 400. FIG. 1 shows one electrode assembly including a anode 400, a solid electrolyte layer 300, and a cathode 200, but an all-solid-state battery may also be fabricated by stacking at least two electrode assemblies.

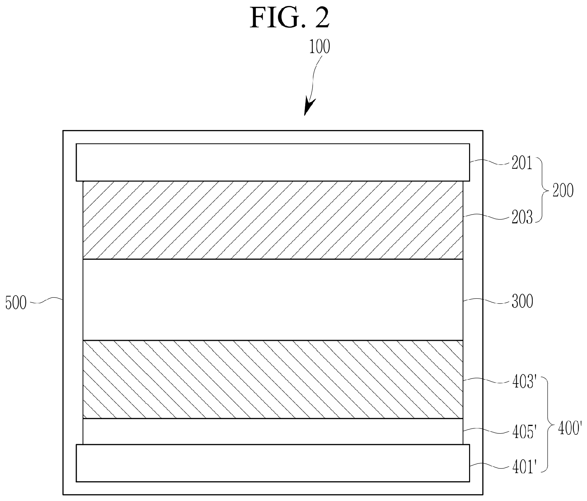

FIG. 2 schematically shows the all-solid-state battery of some embodiments. The all-solid-state battery 100 shown in FIG. 2 includes a cathode 200 including a positive current collector 201 and a cathode active material layer 203, a anode 400 including a anode current collector 401 and a anode coating layer 403, a solid electrolyte 300 between the cathode 200 and the anode 400, a battery case 500 in which these are housed, and a lithium deposition layer 405' between the negative current collector 401 and the negative coating layer 403. Such a lithium deposition layer may be formed during charging of the all-solid-state battery, as lithium ions are released from the cathode active material and are deposited on the anode current collector 401'.

### MODE FOR PERFORMING THE INVENTION

Hereinafter, examples of the present invention and comparative examples are described. These examples, however, are not in any sense to be interpreted as limiting the scope of the invention.

### (Example 1)

### (1) Preparation of anode

Artificial graphite, polyvinylidene fluoride, a ketjen black conductive material, and argyrodite-type solid electrolyte Li₆PS₅Cl were mixed in a powder state using a Thinky mixer at 1000 rpm for 5 minutes to prepare a mixture.

The mixture was mixed with polytetrafluoroethylene to prepare an anode layer mixture. The mixture was planarized using a roller, and a pressure of 2 MPa was applied thereto prepare an anode layer having a thickness of 30 µm.

Herein, based on the total 100 wt% of the anode layer mixture, artificial graphite was included in an amount of 90 wt%, polytetrafluoroethylene in an amount of 3.2 wt%, polyvinylidene fluoride in an amount of 0.8 wt%, the ketjen black conductive material in an amount of 3 wt%, and the argyrodite-type solid electrolyte Li₆PS₅Cl in an amount of 3 wt%.

An anode was prepared by disposing the anode layer film on a stainless steel (SUS) current collector.

### (2) Preparation of solid electrolyte layer

An agyrodite-type solid electrolyte Li₆PS₅Cl was added to an isobutylyl isobutylate binder solution including butyl acrylate as an acrylate-based polymer and mixed to prepare a solid electrolyte liquid (solid amount: 50 wt% and a mixing ratio of solid electrolyte to the binder was 98.7:1.3 by weight ratio).

The solid electrolyte liquid was coated on a release polytetrafluoroethylene film and dried to prepare a 100 µm-thick solid electrolyte layer.

### (3) Preparation of cathode

85 wt% of a LiNi_{0.8}Co_{0.15}Mn_{0.05}O₂ cathode active material, 13.5 wt% of a lithium argyrodite-type solid electrolyte Li₆PS₅Cl, 1.0 wt% of a polyvinylidene fluoride binder, and 0.5 wt% of a carbon nanotubes conductive material were mixed in an N-methyl pyrrolidone solvent to prepare a cathode composition.

The prepared cathode composition was coated on an aluminum cathode current collector, dried, and pressed to prepare a cathode.

### (3) Fabrication of half-cell

The prepared anode, the solid electrolyte layer, and a lithium metal counter electrode were sequentially laminated, and a pressure of 8 MPa was applied to fabricate a half-cell.

### (5) Fabrication of all-solid-state full cell

The prepared anode, the solid electrolyte layer, and the cathode were sequentially laminated, and a pressure of 8 MPa was applied to fabricate.

### (Example 2)

An anode was prepared in the same manner as in Example 1, except that the amounts of artificial graphite, polytetrafluoroethylene, polyvinylidene fluoride, the ketjen black conductive material, and the argyrodite-type solid electrolyte Li₆PS₅Cl used were changed such that, based on the total 100 wt% of the anode layer mixture, artificial graphite was 90 wt%, polytetrafluoroethylene 3.4 wt%, polyvinylidene fluoride 0.6 wt%, the ketjen black conductive material 3 wt%, and the argyrodite-type solid electrolyte Li₆PS₅Cl was 3 wt%.

A half-cell and the full cell were fabricated in the same manner as in Example 1, except that the anode was used.

### (Example 3)

An anode was prepared in the same manner as in Example 1, except that the amounts of artificial graphite, polytetrafluoroethylene, polyvinylidene fluoride, the ketjen black conductive material, and the argyrodite-type solid electrolyte Li₆PS₅Cl used were changed such that, based on the total 100 wt% of the anode layer mixture, artificial graphite was 90 wt%, polytetrafluoroethylene 3.6 wt%, polyvinylidene fluoride 0.4 wt%, the ketjen black conductive material 3 wt%, and the argyrodite-type solid electrolyte Li₆PS₅Cl was 3 wt%.

A half-cell and the full cell were fabricated in the same manner as in Example 1, except that the anode was used.

### (Example 4)

An anode was prepared in the same manner as in Example 1, except that the amounts of artificial graphite, polytetrafluoroethylene, polyvinylidene fluoride, the ketjen black conductive material, and the argyrodite-type solid electrolyte Li₆PS₅Cl used were changed such that, based on the total 100 wt% of the anode layer mixture, artificial graphite was 90 wt%, polytetrafluoroethylene 3.8 wt%, polyvinylidene fluoride 0.2 wt%, the ketjen black conductive material 3 wt%, and the argyrodite-type solid electrolyte Li₆PS₅Cl was 3 wt%.

A half-cell and the full cell were fabricated in the same manner as in Example 1, except that the anode was used.

### (Comparative Example 1)

An anode was prepared in the same manner as in Example 1, except that the amounts of artificial graphite, polytetrafluoroethylene, polyvinylidene fluoride, the ketjen black conductive material, and the argyrodite-type solid electrolyte Li₆PS₅Cl used were changed such that, based on the total 100 wt% of the anode layer mixture, artificial graphite was 90 wt%, polytetrafluoroethylene 3.16 wt%, polyvinylidene fluoride 0.84 wt%, the ketjen black conductive material 3 wt%, and the argyrodite-type solid electrolyte Li₆PS₅Cl was 3 wt%.

A half-cell and the full cell were fabricated in the same manner as in Example 1, except that the anode was used.

### (Comparative Example 2)

An anode was prepared in the same manner as in Example 1, except that the amounts of artificial graphite, polytetrafluoroethylene, polyvinylidene fluoride, the ketjen black conductive material, and the argyrodite-type solid electrolyte Li₆PS₅Cl used were changed such that, based on the total 100 wt% of the anode layer mixture, artificial graphite was 90 wt%, polytetrafluoroethylene 3.84 wt%, polyvinylidene fluoride 0.16 wt%, the ketjen black conductive material 3 wt%, and the argyrodite-type solid electrolyte Li₆PS₅Cl was 3 wt%.

A half-cell and the full cell were fabricated in the same manner as in Example 1, except that the anode was used.

### (Comparative Example 3)

### (1) Preparation of anode

Artificial graphite, polytetrafluoroethylene, polyvinylidene fluoride, a ketjen black conductive material, and an argyrodite-type solid electrolyte Li₆PS₅Cl were mixed at a weight ratio of 95:4:0:0.8:3:3 to prepare an anode layer mixture.

An anode was prepared by disposing the anode layer film on a stainless steel current collector.

A half-cell and the full cell were fabricated in the same manner as in Example 1, except that the anode was used.

### Experimental Example 1) Overvoltage measurement

The all-solid-state half-cells according to Examples 1 to 4 and Comparative Examples 1 to 3 were charged at 0.05 C and a voltage drop began at the open circuit voltage (OCV, approximately 2.5 V). Thereafter, the voltage was measured up to a point where an inflection point occurred around about 0 mV. The results are shown in Table 1, as an initial overvoltage.

### Experimental Example 2) Evaluation of initial efficiency

The all-solid-state half-cells according to Examples 1 to 4 and Comparative Examples 1 to 3 were once charged and discharged at 0.05 C, and the ratio of discharge capacity to charge capacity was calculated using the Equation 1 to obtain an initial efficiency. The results are shown in Table 1. [Equation 1] $Initial efficiency \left(%\right) = \left(discharge capacity/charge capacity\right) ∗ 100$

### Experimental Example 3) Evaluation of cycle-life

The all-solid-state full cells according to Examples 1 to 4 and Comparative Examples 1 to 3 were charged and discharged at 0.33 C for 100 cycles. The ratio of discharge capacity at 100^{th} to discharge capacity at 1^{st} was calculated using the Equation 1. The ratio (C) was classified based on the following criteria, and the results are shown in Table 1. [Equation 1] $\begin{matrix}C = \left(Discharge capacity at {100}^{th}/discharge capacity at 1st\right) * 100 \\ X : C < 90 % \\ O : C \geq 90 %\end{matrix}$

**Table 1**

| | Overvoltage (mV) | Initial efficiency (%) | Cycle-life (%) |
|---|---|---|---|
| Example 1 | 15.9 | 90.5 | O |
| Example 2 | 16.0 | 90.0 | O |
| Example 3 | 15.5 | 90.3 | O |
| Example 4 | 15.6 | 90.4 | O |
| Comparative Example 1 | 16.5 | 87.8 | X |
| Comparative Example 2 | 16.3 | 88.8 | X |
| Comparative Example 3 | 15.9 | 90.5 | X |

As shown in Table 1, the cells according to Examples 1 to 4 including polytetrafluoroethylene and polyvinylidene fluoride at a weight ratio of 95:5 to 80:20 exhibited low overvoltage and excellent initial efficiency and cycle-life. Whereas, the cells according to Comparative Examples 1 and 2 including polytetrafluoroethylene and polyvinylidene fluoride in ranges outside the weight ratio of 95:5 to 80:20, exhibited high overvoltage, somewhat low initial efficiency, and degraded cycle-life.

Furthermore, even if included polytetrafluoroethylene and polyvinylidene fluoride were included at a weight ratio of 95:5 to 80:20 weight ratio, the cell according to Comparative Example 3 fabricated by mixing polytetrafluoroethylene and polyvinylidene fluoride were simultaneously mixed, exhibited appropriate initial efficiency, but the binder was non-uniform, thereby exhibiting deteriorated cycle-life as repeated charging and discharging.

Experimental Example 4) Evaluation of FE-SEM(Field Emission SEM) 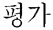

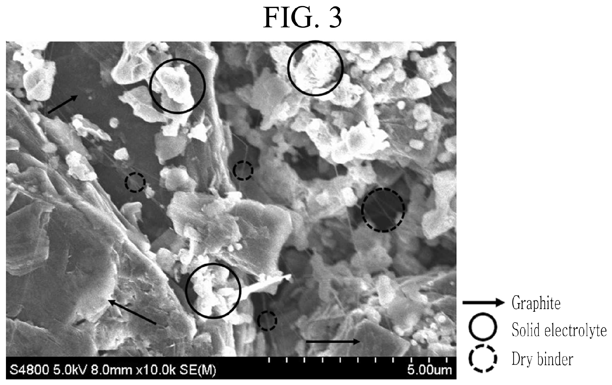

The anode according to Example 1 was cross-polished to flatten the cross-section, and the sample was examined using FE-SEM. The results are shown in FIG. 3. In FIG. 3, arrows indicate artificial graphite, solid circles indicate solid electrolyte, and dotted circles indicate dry binders, i.e., polytetrafluoroethylene and polyvinylidene fluoride.

These results showed that polytetrafluoroethylene and polyvinylidene fluoride were well located in the anode layer.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. An anode for an all-solid-state battery, comprising:
an anode current collector; and
an anode layer on the anode current collector and comprising an anode active material, a solid electrolyte, polytetrafluoroethylene, and polyvinylidene fluoride,
wherein a mixing ratio of polytetrafluoroethylene to polyvinylidene fluoride is 95:5 to 80:20 by weight ratio.

2. The anode for an all-solid-state of claim 1, wherein the anode active material is crystalline carbon, a Si-based material, or a combination thereof.

3. The anode for an all-solid-state of claim 1, wherein the anode active material is crystalline carbon.

4. The anode for an all-solid-state of claim 3, wherein the crystalline carbon is natural graphite, artificial graphite, or a combination thereof.

5. The anode for an all-solid-state of claim 1, wherein the mixing ratio of polytetrafluoroethylene to polyvinylidene fluoride is 90:10 to 85:15 by weight ratio.

6. The anode for an all-solid-state of claim 1, wherein the polytetrafluoroethylene is a fibrillated polytetrafluoroethylene.

7. The anode for an all-solid-state of claim 1, wherein the solid electrolyte is a sulfide-based solid electrolyte.

8. The anode for an all-solid-state of claim 1, wherein a total amount of polytetrafluoroethylene and polyvinylidene fluoride is 1 wt% to 7 wt% based on the total 100 wt% of the anode layer.

9. The anode for an all-solid-state of claim 1, wherein an amount of the anode active material is 70 wt% to 85 wt% based on the total weight of the anode layer.

10. The anode for an all-solid-state of claim 1, wherein an amount of the solid electrolyte is 5 wt% to 28 wt% based on the total 100 wt% of the anode layer.

11. The anode for an all-solid-state of claim 1, wherein the anode layer further comprises a conductive material.

12. A method of preparing an anode for an all-solid-state battery, comprising:
mixing an anode active material, polyvinylidene fluoride, and a solid electrolyte to prepare a mixture;
mixing the mixture with polytetrafluoroethylene to prepare an anode layer mixture; and
pressing the anode layer mixture.

13. The method of preparing an anode for an all-solid-state battery of claim 12, wherein the pressing is carried out by applying a pressure of 2 MPa to 10 MPa.

14. The method of preparing an anode for an all-solid-state battery of claim 12, wherein the anode active material is crystalline carbon, a Si-based material, or a combination thereof.

15. The method of preparing an anode for an all-solid-state battery of claim 12, wherein the anode active material is crystalline carbon.

16. The method of preparing an anode for an all-solid-state battery of claim 12, wherein in the anode layer mixture, the mixing ratio of polytetrafluoroethylene and polyvinylidene fluoride is 95:5 to 80:20 by weight ratio.

17. The method of preparing an anode for an all-solid-state battery of claim 16, wherein in the anode layer mixture, the mixing ratio of polytetrafluoroethylene and polyvinylidene fluoride is 90:10 to 85:15 by weight ratio.

18. The method of preparing an anode for an all-solid-state battery of claim 12, wherein the solid electrolyte is a sulfide-based solid electrolyte.

19. An all-solid-state battery, comprising:
the anode of any one of claim 1 to claim 11;
a cathode; and
a solid electrolyte layer between the anode and the cathode.
